# EUROPEAN PATENT APPLICATION

(11) **EP 3 018 732 A1**
(43) Date of publication of application: **11.05.2016**
(21) Application number: 15787120.3
(22) Date of filing: 08.07.2015
(51) Int. Cl.: H01M 2/12, H01M 2/02, H01M 2/30, H01M 2/26, H01M 10/04, H01M 10/05

(54) **HOLLOW TYPE SECONDARY BATTERY AND CONNECTOR FOR HOLLOW TYPE SECONDARY BATTERY**

(30) Priority: 31.07.2014 KR 20140098343; 28.08.2014 KR 20140112784
(71) Applicant: Orange Power Ltd., Daejeon 305-509 (KR)
(72) Inventor: HONG, Young Jin, Daejeon 305-756 (KR); LEE, Young Jae, Daejeon 305-722 (KR); LEE, Sung Keun, Daejeon 305-739 (KR); KANG, Soon Sun, Seoul 158-776 (KR)
(74) Representative: Isarpatent
(86) International application number: PCT/KR2015/007053
(87) International publication number: WO 2016/017958

(57) **Abstract**

The present invention relate to a connector for a hollow core secondary battery, and in particular, to a connector of a hollow core secondary battery, which is configured to allow for a plurality of hollow core secondary batteries to be connected in parallel or series without any welding process and moreover to allow for hollows, which are formed to penetrate central portions of the secondary batteries, to be connected to each other.

The present invention provides a connector for a hollow core secondary battery comprising a case having first and second openings formed through a sidewall of the case with a predetermined interval; a first connection portion provided at the first opening and coupled to a first terminal portion, which is provided at a side of the hollow core secondary battery, thereby connecting a hollow of the hollow core secondary battery to the first opening; a second connection portion provided at the second opening and coupled to a second terminal portion, which is provided at other side of the hollow core secondary battery, thereby connecting the hollow of the hollow core secondary battery to the second opening; and a conduit provided in the case to connect the first and second openings to each other.

## Description

### [Technical Field]

The present invention relate to a hollow core secondary battery and a connector for a hollow core secondary battery, and in particular, to a hollow core secondary battery, which is configured to quickly exhaust heat and gas generated therein to the outside and to stably realize electric isolation between an electrode assembly and inner and outer containers, and a connector, which is configured to allow for a plurality of hollow core secondary batteries to be connected in parallel or series without any welding process and moreover to allow for hollows, which are formed to penetrate central portions of the secondary batteries, to be connected to each other.

### [Background Art]

With the growth in new technology and demand for mobile devices, there is a rapidly increasing demand for a secondary battery serving as an energy source of the mobile devices.

The secondary battery is being used in a variety of application fields and products, and thus, a variety of the secondary batteries are developed to achieve appropriate product properties (e.g., in output and capacity). For example, one or more small and light secondary batteries (e.g., unit batteries) may be used for each of small mobile devices (e.g., cellular phones, personal digital assistants (PDAs), digital cameras, and notebook computers), and a battery module, in which a plurality of secondary batteries connected in parallel or series by a connector are provided, may be used for large-size electronic products.

However, according to the conventional technology, the secondary batteries have a sealed internal structure, and thus, it is difficult to cope with a safety accident (e.g., short circuit), which may occur in the battery.

Furthermore, due to the sealed internal structure of the conventional secondary batteries, it is difficult to exhaust heat and gas, which may be produced in the battery (for example, from decomposition of an electrolyte) to the outside.

Furthermore, according to the conventional technology, the connector of the battery module is welded to a terminal of the secondary battery. However, it takes a long time to perform a position alignment operation for a welding process.

### [Disclosure]

### [Technical Problem]

Embodiments of the present invention provide hollow core secondary batteries configured to quickly exhaust heat and gas generated therein to the outside and moreover to stably realize electric isolation between an electrode assembly and inner and outer containers.

Embodiments of the present invention provide connectors, which are used for a hollow core secondary battery and are configured to allow for a plurality of hollow core secondary batteries to be connected in parallel or series without any welding process, and moreover, to allow for hollows, which are formed to penetrate central portions of the secondary batteries, to be connected to each other

### [Technical Solution]

According to embodiments of the present invention, a hollow core secondary battery may include an outer container having a hollow with open opposite ends and containing an electrode assembly therein, an inner container having a hollow with open opposite ends and being inserted in a central portion of the electrode assembly, and a vent unit provided on or in the inner container, wherein, when an internal pressure of the battery may be increased above a predetermined value, the vent unit may be ruptured to allow for gas and heat to be exhausted to an outside through the hollow of the inner container.

In some embodiments, a diameter of the outer container may increase in a direction from a central portion thereof toward both end portions thereof, and a diameter of the inner container may decrease in a direction from a central portion thereof toward both end portions thereof.

In some embodiments, the vent unit may include a vent hole provided through a sidewall of the inner container and a cover provided to close the vent hole. Here, when the internal pressure of the battery is increased above the predetermined value, the cover may be ruptured to open the vent hole.

In some embodiments, a diameter of the vent hole may increase in a direction from an outer surface of the inner container toward an inner surface of the inner container.

In some embodiments, the inner container may be provided to have a notch formed in an inner or outer surface thereof, and the notch may be formed along a circumference of the vent unit to have a predetermined depth.

According to another aspect, a hollow core secondary battery may include an electrode assembly including a pair of electrode plates and a separator therebetween, the electrode plates and the separator being wound in a form of a jelly roll, an outer container having a hollow with open opposite ends and containing the electrode assembly therein, an inner container having a hollow with open opposite ends and being inserted in a central portion of the electrode assembly, a first insulating unit inserted between the outer container and the electrode assembly to enclose an outer surface of the electrode assembly, and a second insulating unit inserted between the inner container and the electrode assembly to enclose an outer surface of the inner container.

In some embodiments, the first insulating unit may be an insulating tape adhered to an inner surface of the outer container. Alternatively, the first insulating unit may be a cylindrical tube, whose outer surface is in close contact with an inner surface of the outer container.

In some embodiments, the second insulating unit may be an insulating tape adhered to the outer surface of the inner container. Alternatively, the second insulating unit may be a cylindrical tube, in which the inner container is inserted.

In some embodiments, the second insulating unit may have a length smaller than that of the inner container, and outer surfaces of both end portions of the inner container may be exposed to a predetermined length.

According to another aspect, a connector for a hollow core secondary battery may include a case with first and second openings, the first and second openings being formed spaced apart from each other by a predetermined space and through a sidewall of the case, a first connection portion provided at the first opening and coupled to a first terminal portion, which is provided at a side of the hollow core secondary battery, thereby connecting a hollow of the hollow core secondary battery to the first opening, a second connection portion provided at the second opening and coupled to a second terminal portion, which is provided at other side of the hollow core secondary battery, thereby connecting the hollow of the hollow core secondary battery to the second opening, and a conduit provided in the case to connect the first and second openings to each other.

In some embodiments, the first connection portion may include a first connection plate, which is fixedly attached to the case and has a hole connected to the first opening, and a first connection terminal protruding from a surface of the first connection plate. The first terminal portion may include a first terminal, which is inserted the first opening, and whose an outer surface thereof is in contact with an inner surface of the first connection terminal. Here, the first terminal may include a hole connected to the hollow of the hollow core secondary battery. The first terminal portion may further include a second terminal, which is provided to enclose the first connection terminal and have an inner surface in contact with an outer surface of the first connection terminal.

In some embodiments, the first connection portion may further include a first insulating unit, which is extended from the case and is formed spaced apart from the first connection terminal by a predetermined distance to enclose the first connection terminal.

In some embodiments, the second connection portion may include a second connection plate, which is fixedly attached to the case and has a hole connected to the second opening, a second connection terminal protruding from a surface of the second connection plate, and a third connection terminal protruding from a surface of the second connection plate. The third connection terminal may be spaced apart from the second connection terminal by a predetermined distance to enclose the second connection terminal. The second terminal portion may include a hole connected to the hollow of the secondary battery and may be inserted between the second and third connection terminals to be in contact with the second and third connection terminals, respectively.

In some embodiments, the second connection portion may further include a second insulating unit, which is extended from the case to enclose an outer surface of the third connection terminal.

According another aspect, a connector for a hollow core secondary battery may include a case with first, second, third, and fourth openings, a first connection portion provided at the first and second openings and coupled to a first terminal portion, which is provided at a side of the hollow core secondary battery, and a second connection portion provided at the third and fourth openings and coupled to a second terminal portion, which is provided at other side of the hollow core secondary battery. The first and second openings may be formed spaced apart from each other by a predetermined space and through a sidewall of the case, and the third and fourth openings may be formed spaced apart from each other by a predetermined space and through other sidewall of the case. The first connection portion may be provided to connect a hollow of the hollow core secondary battery to each of the first and second openings, and the second connection portion may be provided to connect the hollow of the hollow core secondary battery to each of the third and fourth openings.

### [Advantageous Effects]

According to embodiments of the present invention, a hollow of an inner container may be exposed to the outside, and thus, it is possible to quickly exhaust heat generated in a battery to the outside.

According to embodiments of the present invention, when a pressure higher than a predetermined value is applied to an inner container, a vent unit may be configured to be ruptured, and this may make it possible to exhaust heat and gas generated in a battery to the outside through a hollow of the inner container.

According to embodiments of the present invention, first and second insulating units may be provided at outer and inner containers, respectively, to electrically separate an electrode assembly from the inner and outer containers.

According to embodiments of the present invention, a plurality of secondary batteries may be connected in parallel or series to each other without any welding process and may be configured to have hollows that are connected to each other. Accordingly, by circulating a cooling medium through the hollows of the secondary batteries, it is possible to quickly cool the plurality of hollow core secondary batteries.

### [Description of Drawings]

FIG. 1 is a perspective view illustrating a hollow core secondary battery according to a first embodiment of the inventive concept.
FIG. 2 is a perspective view illustrating a detailed structure of an outer container shown in FIG.1.
FIG. 3 is a perspective view illustrating a detailed structure of the inner container shown in FIG.1.
FIG. 4 is a sectional view illustrating the outer container shown in FIG.1.
FIG. 5 is a sectional view illustrating the inner container shown in FIG. 1.
FIG. 6 is a diagram illustrating a state in which pressure is applied to a cover closing a vent hole.
FIG. 7 is a diagram illustrating a cover according to other embodiments of the inventive concept.
FIG. 8 is a diagram illustrating a vent unit according to other embodiments of the inventive concept.
FIG. 9 is a perspective view illustrating a hollow core secondary battery according to a second embodiment of the inventive concept.
FIG. 10 is an exploded perspective view illustrating the hollow core secondary battery according to the second embodiment of the inventive concept.
FIG. 11 is a perspective view illustrating an outer container and a first insulating unit, which are coupled to each other.
FIG. 12 is a perspective view illustrating an inner container and a second insulating unit, which are coupled to each other.
FIG. 13 is a perspective view illustrating a connector for a hollow core secondary battery according to a third embodiment of the inventive concept.
FIG. 14 is a sectional view taken along line A-A' of FIG. 13.
FIG. 15 is a perspective view illustrating a state in which secondary batteries are connected by a connector for a hollow core secondary battery according to the third embodiment of the inventive concept.
FIG. 16 is a perspective view illustrating other structure of a connector for a hollow core secondary battery according to the third embodiment of the inventive concept.
FIGS. 17 and 18 are perspective views illustrating a connector for a hollow core secondary battery according to a fourth embodiment of the inventive concept.
FIG. 19 is a perspective view illustrating a state in which secondary batteries are connected by a connector for a hollow core secondary battery according to the fourth embodiment of the inventive concept.
FIG. 20 is a perspective view illustrating other structure of a connector for a hollow core secondary battery according to the fourth embodiment of the inventive concept.

### [Best Mode]

Hereinafter, exemplary embodiments of the present invention will be described in detail with reference to the accompanying drawings. It should be noted that the same elements are indicated by the same reference numerals or the same reference designators even though shown in different drawings. In addition, in explanation of the present invention, the descriptions to the elements and functions of related arts may be omitted if they obscure the subjects of the present invention.

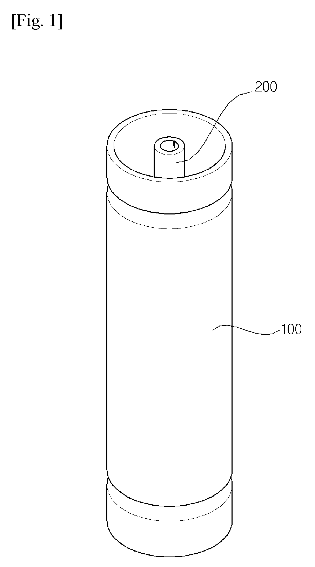

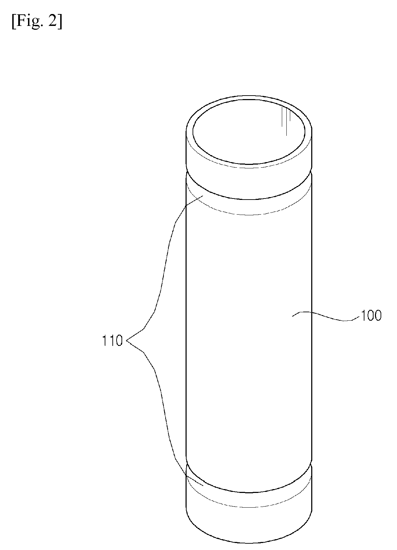

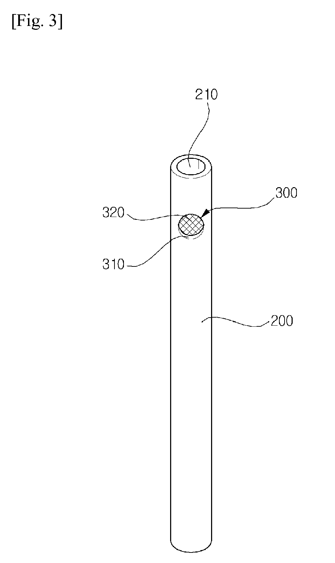

FIG. 1 is a perspective view illustrating a hollow core secondary battery according to a first embodiment of the inventive concept, FIG. 2 is a perspective view illustrating a detailed structure of an outer container shown in FIG. 1, and FIG. 3 is a perspective view illustrating a detailed structure of the inner container shown in FIG.1.

As shown in FIGS. 1 through 3, a hollow core secondary battery according to example embodiments of the inventive concept may include an outer container 100, an inner container 200, and a vent unit 300.

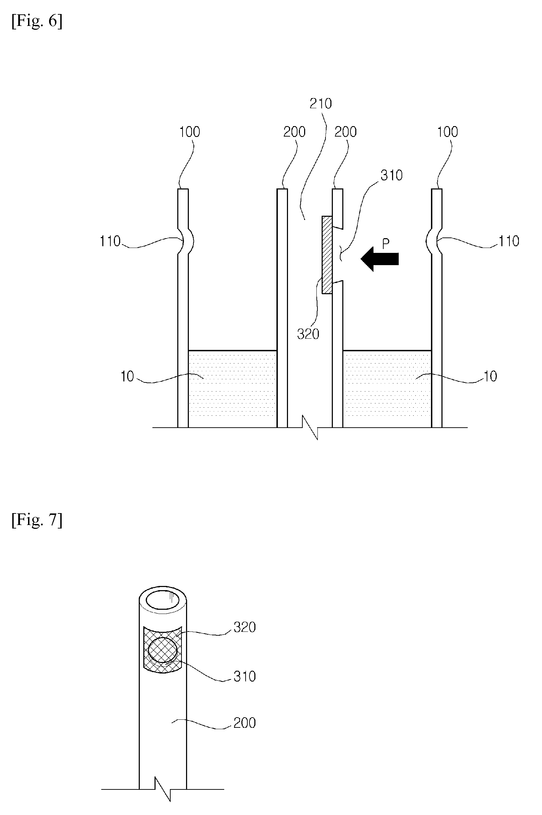

The outer container 100 may be provided to have a hollow with open opposite ends, and the electrode assembly 10 may be provided in the outer container 100 (e.g., see FIG. 6). The electrode assembly 10 may include a pair of electrode plates serving as positive or negative terminals and a separator interposed between the pair of electrode plates, and here, the electrode plates and the separator may be wound in the form of a jelly roll.

The outer container 100 may be formed of aluminum, aluminum alloy, nickel-plated steel, or stainless steel (STS).

Although not shown, the outer container 100 may be filled with an electrolyte, and thus, the open opposite ends of the outer container 100 may be closed in a battery assembling process.

Furthermore, a beading portion 110 may be formed at both end portions of the outer container 100 and may be inwardly bent by a pressure.

The beading portion 110 may be formed to prevent the electrode assembly 10 from being removed from the outer container 100. The beading portion 110 may be formed by pressing an outer surface of the outer container 100 using a jig and so forth, after inserting the electrode assembly 10 into the outer container 100.

The inner container 200 may be inserted into a central portion of the electrode assembly 10, thereby preventing the electrode assembly 10 from being deformed. Furthermore, the inner container 200 may have a hollow with open opposite ends, and thus, it is possible to quickly discharge heat, which may be generated in the electrode assembly 10 provided between the outer and inner containers 100 and 200, to the outside through a hollow 210 of the inner container 200.

The inner container 200 may also be formed of aluminum, aluminum alloy, nickel-plated steel, or stainless steel (STS), like the outer container 100.

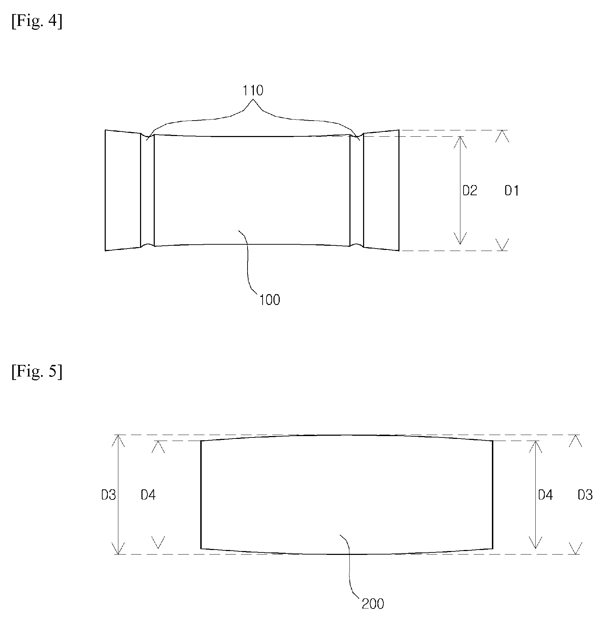

FIG. 4 is a sectional view illustrating the outer container shown in FIG. 1, and FIG. 5 is a sectional view illustrating the inner container shown in FIG. 1.

As shown in FIG. 4, the outer container 100 may have a cylindrical structure, whose diameter increases in a direction from a central portion toward both end portions. For example, both end portions of the outer container 100 may have a diameter D1 greater than a diameter D2 of the central portion of the outer container 100.

In this case, it is possible to easily insert the electrode assembly 10 into the outer container 100, and after such an insertion of the electrode assembly 10, the electrode assembly 10 may not be easily removed from the outer container 100, because the electrode assembly 10 is caught by the central portion of the outer container 100 with a small diameter.

Furthermore, as shown in FIG. 5, the inner container 200 may have a cylindrical structure, whose diameter decreases in a direction from a central portion toward both end portions. For example, both end portions of the inner container 200 may have a diameter D4 less than a diameter D3 of the central portion of the inner container 200.

In this case, it is possible to easily insert the inner container 200 into the central portion of the electrode assembly 10, and since the central portion of the inner container 200 with a large diameter is forcedly inserted into the central portion of the electrode assembly 10, it is possible to prevent the inner container 200 from being separated from the electrode assembly 10.

Preferably, the outer and inner containers 100 and 200 may have a thickness ranging from 0.3 mm to 3.00 mm. In the case where the outer and inner containers 100 and 200 are excessively thin (e.g., thinner than the lower limit of the preferred range), the outer and inner containers 100 and 200 may suffer from a problem of reduced mechanical strength, whereas in the case where the outer and inner containers 100 and 200 are excessively thick (e.g., thicker than the upper limit of the preferred range), there may be several issues, such as an increase in total weight of the secondary battery, a reduction in size of the electrode assembly 10, and a reduction in capacity of the secondary battery.

The vent unit 300 may be provided in or on the inner container 200, and if an internal pressure of the battery is increased above a predetermined value, the vent unit 300 may be ruptured to allow for gas and heat generated in the battery to be exhausted to the outside through the hollow 210 of the inner container 200.

In more detail, if, as a result of occurrence of an internal short circuit in the battery or decomposition of the electrolyte, internal pressure and temperature of the battery reach predetermined values (e.g., an operation reference temperature of 125°C and an operation reference pressure of 18.5kgf/cm²), the vent unit 300 may be ruptured to allow for the hollow 210 of the inner container 200 to be connected to a space provided with the electrode assembly 10 between the outer and inner containers 100 and 200. Accordingly, gas and heat, which is generated between the inner and outer containers 200 and 100, may be transferred into the hollow 210 of the inner container 200 through the ruptured portion of the vent unit 300 and may be exhausted to the outside.

The vent unit 300 may include a vent hole 310 formed through a sidewall of the inner container 200 and a cover 320 provided in the inner container 200. Here, the cover 320 may be provided to close the vent hole 310, but in the case where an internal pressure of the battery is increased above a predetermined value, the cover 320 may be detached from the vent hole 310, thereby allowing for the vent hole 310 to be opened.

FIG. 6 is a diagram illustrating a state in which pressure is applied to a cover closing a vent hole.

Here, as shown in FIG. 6, the cover 320 may be provided on an inner surface of the inner container 200, and this structure of the vent unit 300 may make it possible for the cover 320 to be easily detached from the vent hole 310 by an internal pressure P of the battery.

Furthermore, the vent hole 310 may be formed to have a diameter increasing in a direction from an outer surface to an inner surface of the inner container 200. This may lead to an increase in area of the cover 320, to which the pressure P is applied, as shown in FIG. 6, and thus, the cover 320 can be detached from the vent hole 310, when the pressure P reach a predetermined pressure. Furthermore, if the cover 320 is detached from the vent hole 310, it may be automatically positioned in the hollow 210 of the inner container 200, and thus, it is possible to easily remove the detached cover 320.

FIG. 7 is a diagram illustrating a cover according to other embodiments of the inventive concept.

As shown in FIG. 7, the cover 320 may be installed to the outer surface of the inner container 200 to close the vent hole 310.

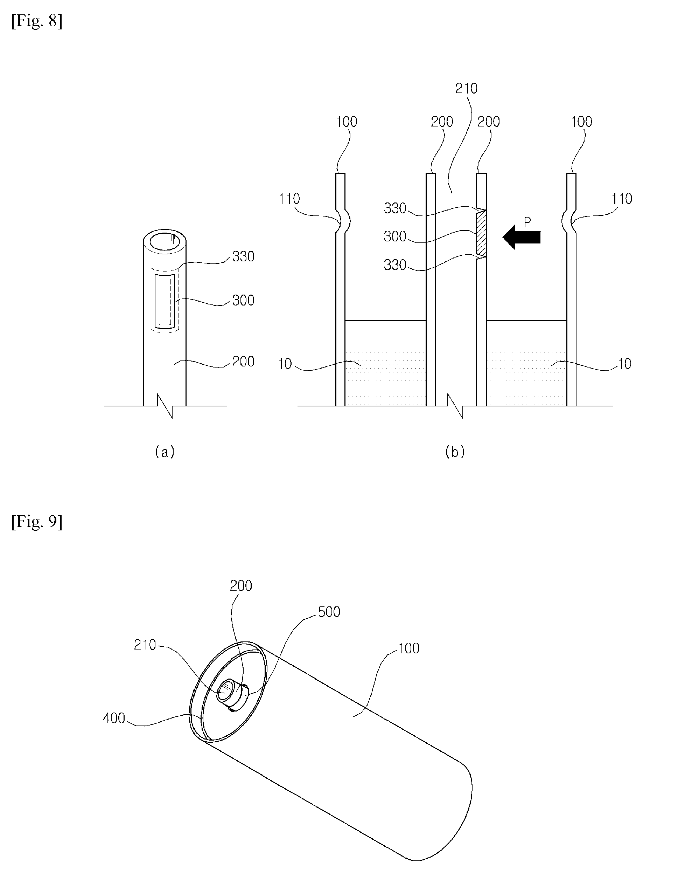

FIG. 8 is a diagram illustrating a vent unit according to other embodiments of the inventive concept.

As shown in FIG. 8, the inner surface of the inner container 200 may be formed to have a notch 330, which is formed around the vent unit 300 and has a predetermined depth.

In this case, when a pressure P is applied to the vent unit 300 as shown in FIG. 8(b), the notch 330 may be ruptured to separate the vent unit 300 from the inner container 200. According to the structure of the vent unit of FIG. 8, it is possible to simply a structure of the vent unit 300 and thereby to reduce fabrication cost thereof.

In certain embodiments, the notch 330 may be formed on the outer surface of the inner container 200.

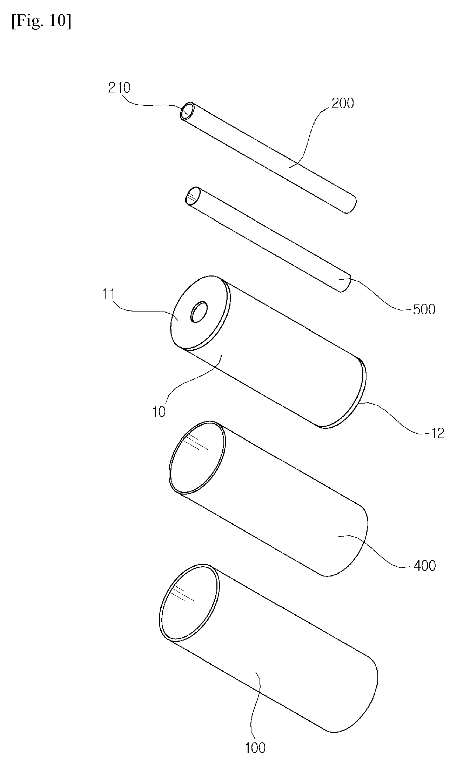

FIG. 9 is a perspective view illustrating a hollow core secondary battery according to a second embodiment of the inventive concept, and FIG. 10 is an exploded perspective view illustrating the hollow core secondary battery according to the second embodiment of the inventive concept.

As shown in FIGS. 9 and 10, the hollow core secondary battery according to the second embodiment of the inventive concept may include the electrode assembly 10, the outer container 100, the inner container 200, a first insulating unit 400, and a second insulating unit 500.

As described above, the electrode assembly 10 may be provided to include a pair of electrode plates serving as positive or negative terminals and a separator interposed between the pair of electrode plates, and the electrode plates and the separator may be wound in the form of a jelly roll.

First and second uncoated parts 11 and 12 may be provided at both end portions of the electrode assembly 10. The first uncoated part 11 may be provided on an electrode plate serving as a positive terminal to have a positive polarity, and the second uncoated part 12 may be provided on an electrode plate serving as a negative terminal to have a negative polarity. In the case where the polarity of the electrode plate is changed, the polarities of the first and second uncoated parts 11 and 12 may also be changed.

The outer container 100 may have a hollow with open opposite ends, and the electrode assembly 10 may be contained in the outer container 100.

The inner container 200 may be inserted into a central portion of the electrode assembly 10, thereby preventing the electrode assembly 10 from being deformed. Furthermore, the inner container 200 may have a hollow with open opposite ends and may be configured to quickly discharge heat, which may be generated in the electrode assembly 10 positioned between the outer and inner containers 100 and 200, to the outside through the hollow 210 of the inner container 200.

The first insulating unit 400 may be inserted between the outer container 100 and the electrode assembly 10 to enclose an outer surface of the electrode assembly 10. Accordingly, the first insulating unit 400 may prevent the outer surface of the electrode assembly 10 from being in contact with an inner surface of the outer container 100, and thus, it is possible to realize stable electric isolation between the outer container 100 and the electrode assembly 10.

The first insulating unit 400 may be formed of materials having chemical resistance with consideration of electrolyte provided in the battery as well as thermal conductivity and electric insulation characteristics. For example, the first insulating unit 400 may be formed of polyvinyl difluoride (PVdF), polypropylene, polyisoprene, polypropylene, ethylenepropylene, polyethyleneterephthalate (PET), or polyimide.

Here, the insulation characteristics of the first insulating unit 400 may be considered to be fine when the electrical resistance is measured to be 1 MΩ or higher after applying a voltage difference of 1000V between the outer container 100 and the negative or positive terminal of the battery.

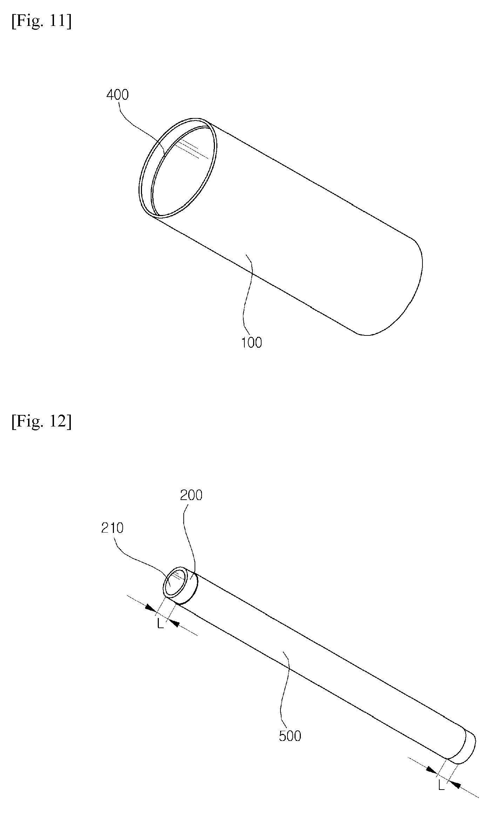

FIG. 11 is a perspective view illustrating an outer container and a first insulating unit, which are coupled to each other.

In detail, as shown in FIG. 11, the first insulating unit 400 may be provided in the form of a cylindrical tube, whose outer surface is in close contact with the inner surface of the outer container 100, or an insulating tape adhered to the inner surface of the outer container 100.

In certain embodiments, the first insulating unit 400 may be formed by coating a thermally-conductive and electrically-insulating material on the inner surface of the outer container 100. Furthermore, the first insulating unit 400 may be formed to have an chemical resistance and a predetermined thickness.

The second insulating unit 500 may be inserted between the inner container 200 and the electrode assembly 10 to enclose the outer surface of the inner container 200. Accordingly, the second insulating unit 500 may prevent an inner surface of the electrode assembly 10 from being in contact with the outer surface of the inner container 200, and thus, it is possible to realize stable electric isolation between the inner container 200 and the electrode assembly 10.

Similar to the case of the first insulating unit 400, the second insulating unit 500 may also be formed of materials having chemical resistance with consideration of electrolyte provided in the battery as well as thermal conductivity and electric insulation characteristics. For example, the second insulating unit 500 may be formed of polyvinyl difluoride (PVdF), polypropylene, polyisoprene, polypropylene, ethylenepropylene, polyethyleneterephthalate (PET), or polyimide.

Here, the insulation characteristics of the second insulating unit 500 may be considered to be fine when the electrical resistance is measured to be 1 MΩ or higher after applying a voltage difference of 1000V between the outer container 100 and the negative or positive terminal of the battery.

FIG. 12 is a perspective view illustrating an inner container and a second insulating unit, which are coupled to each other.

In detail, as shown in FIG. 12, the second insulating unit 500 may be provided in the form of a cylindrical tube, and in this case, the inner container 200 may be inserted into the second insulating unit 500. In certain embodiments, the second insulating unit 500 may be provided in the form of an insulating tape and may be adhered to the outer surface of the inner container 200.

In certain embodiments, similar to the case of the first insulating unit 400, the second insulating unit 500 may be formed by coating a thermally-conductive and electrically-insulating material on the outer surface of the inner container 200. Furthermore, the second insulating unit 500 may be formed to have an chemical resistance and a predetermined thickness.

The second insulating unit 500 may be provided to have a length shorter than that of the inner container 200 so that outer surfaces of both end portions of the inner container 200 may be exposed outside at a predetermined length L (e.g., ranging from 2.5 mm to 8.2 mm).

In this case, by welding both end portions of the inner container 200 to cover plates (not shown) sealing opened ends of the outer container 100, it is possible to prevent the inner container 200 from being separated from the electrode assembly 10.

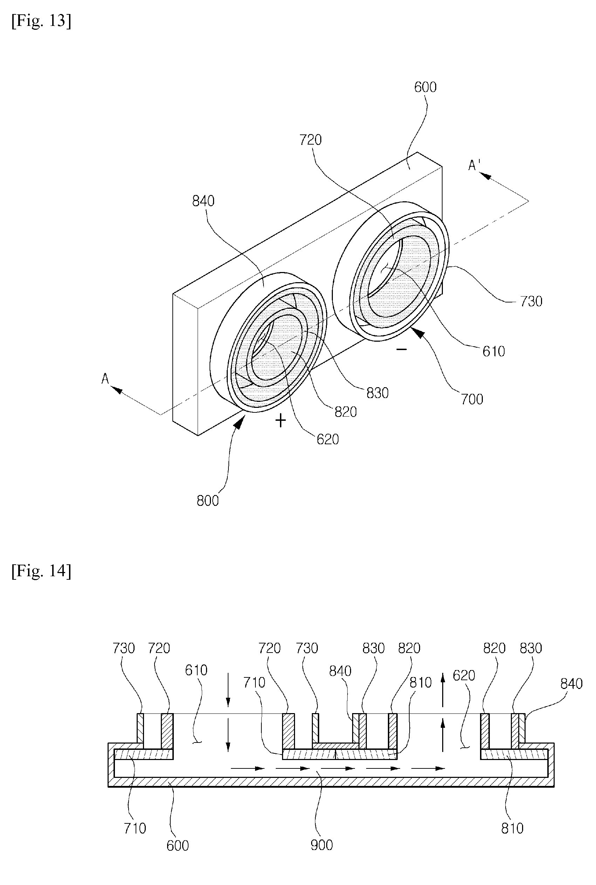

FIG. 13 is a perspective view illustrating a connector for a hollow core secondary battery according to a third embodiment of the inventive concept, and FIG. 14 is a sectional view taken along line A-A' of FIG. 13.

As shown in FIGS. 13 and 14, a connector for a hollow core secondary battery according to example embodiments of the inventive concept may include a case 600, a first connection portion 700, a second connection portion 800, and a conduit 900.

The case 600 may be provided in the form of an empty rectangular box, and first and second openings 610 and 620 may be formed through a sidewall of the case 600. In certain embodiments, if necessary, the shape of the case 600 may be variously changed (e.g., to have a circular or elliptical shape).

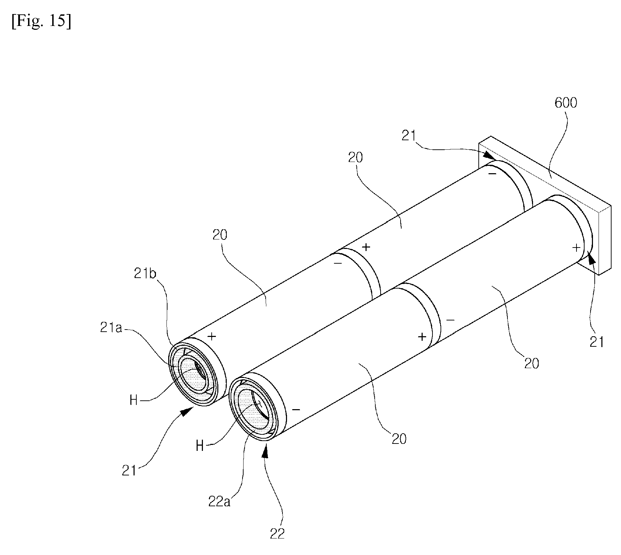

The first connection portion 700 may be coupled to a first terminal portion 21, which is provided in the first opening 610 and is positioned at a side of the hollow core secondary battery 20 (e.g., see FIG. 15).

FIG. 15 is a perspective view illustrating a state in which secondary batteries are connected by a connector for a hollow core secondary battery according to the third embodiment of the inventive concept.

In detail, as shown in FIG. 15, the first connection portion 700 may be connected to the first terminal portion 21 provided at an end of the hollow core secondary battery 20 to connect a hollow H of the hollow core secondary battery 20 to the first opening 610.

The first connection portion 700 may be fixedly attached to the case 600 and may include a first connection plate 710 and a first connection terminal 720. The first connection plate 710 may be provided to have a hole connected to the first opening 610, and the first connection terminal 720 may protrude from a side surface of the first connection plate 710

Furthermore, the first terminal portion 21 may be provided to have a hole connected to the hollow H of the secondary battery 20 and may include a first terminal 21 a inserted into the first opening 610 and a second terminal 21b provided to enclose the first terminal 21a.

Accordingly, if the first terminal portion 21 is connected to the first connection portion 700, an outer surface of the first terminal 21a may be in contact with an inner surface of the first connection terminal 720 and an inner surface of the second terminal 21b may be in contact with an outer surface of the first connection terminal 720.

The second connection portion 800 may be provided in the second opening 620 and may be connected to a second terminal portion 22 provided at the other side of the secondary battery 20.

In detail, the second connection portion 800 may be connected to the second terminal portion 22 provided at the other side of the hollow core secondary battery 20 to allow the hollow H of the hollow core secondary battery 20 to be connected to the second opening 620.

The second connection portion 800 may be fixedly attached to the case 600 and may include, for example, a second connection plate 810, a second connection terminal 820, and a third connection terminal 830. The second connection plate 810 may be provided to have a hole connected to the second opening 620 and the second connection terminal 820 may be provided to protrude from a surface of the second connection plate 810. The third connection terminal 830 may be provided spaced apart from the second connection terminal 820 by a predetermined distance. Furthermore, the third connection terminal 830 may be provided to enclose the second connection terminal 820 and protrude from the surface of the second connection plate 810.

Here, the second connection plate 810 may be electrically connected to the first connection plate 710. Accordingly, as shown in FIG. 15, in the case where the first and second terminal portions 21 and 22 of the hollow core secondary batteries are respectively connected to the first and second connection portions 700 and 800, the secondary batteries 20 may be arranged in a parallel manner and may be electrically connected in series to each other.

Furthermore, the second terminal portion 22 may be provided to have a hole connected to the hollow H of the secondary battery 20 and moreover to include a third terminal 22a. When the second terminal portion 22 is connected to the second connection portion 800, the third terminal 22a may be inserted into a space between the second and third connection terminal 820 and 830. For example, inner and outer surfaces of the third terminal 22a may be in contact with the second and third connection terminal 820 and 830, respectively.

The hollow core secondary battery may be configured in such a way that the first and second terminal portions 21 and 22 are coupled to each other. In this case, as shown in FIG. 15, it is possible to connect a plurality of the secondary batteries 20 in series, without any additional interconnecting component.

As shown in FIG. 14, the conduit 900 may be formed in the case 600 to connect the first and second openings 610 and 620 to each other. Accordingly, in the case where, as shown in FIG. 15, the first and second terminal portions 21 and 22 of the hollow core secondary battery are connected to the first and second connection portions 700 and 800, respectively, the hollows H of the secondary batteries may be connected to each other through the first and second openings 610 and 620 and the conduit 900.

In this case, if a cooling medium (e.g., cooling air or water) is supplied into the hollow H of one of the secondary batteries, the cooling medium may be injected into the hollow H of the other of the secondary batteries through the first opening 610, the conduit 900, and the second opening 620, as depicted by the arrow of FIG. 14. Accordingly, the cooling medium may be used to successively cool the secondary batteries 20 connected to each other in parallel or in series.

In particular, if, although not shown, a pair of connectors is coupled to both end portions, respectively, of the hollow core secondary batteries 20 arranged in parallel, the hollows H of the secondary batteries 20 may be connected to each other by the pair of connectors. Accordingly, it is possible to circulate the cooling medium along a circulation conduit, which may be formed by the hollow H of each of the secondary batteries 20 and the connectors, and thereby to successively cool the secondary batteries 20.

In some embodiments, the first connection portion 700 may further include a first insulating cover 730, which is provided spaced apart from the first connection terminal 720, by a predetermined distance, to enclose the first connection terminal 720, and the second connection portion 800 may further include a second insulating cover 840 provided to enclose an outer surface of the third connection terminal 830. The first and second insulating covers 730 and 840 may be extended from the case 600 and may be formed to electrically separate the first and second terminal portions 21 and 22, which are coupled to the first and second connection portions 700 and 800, from each other.

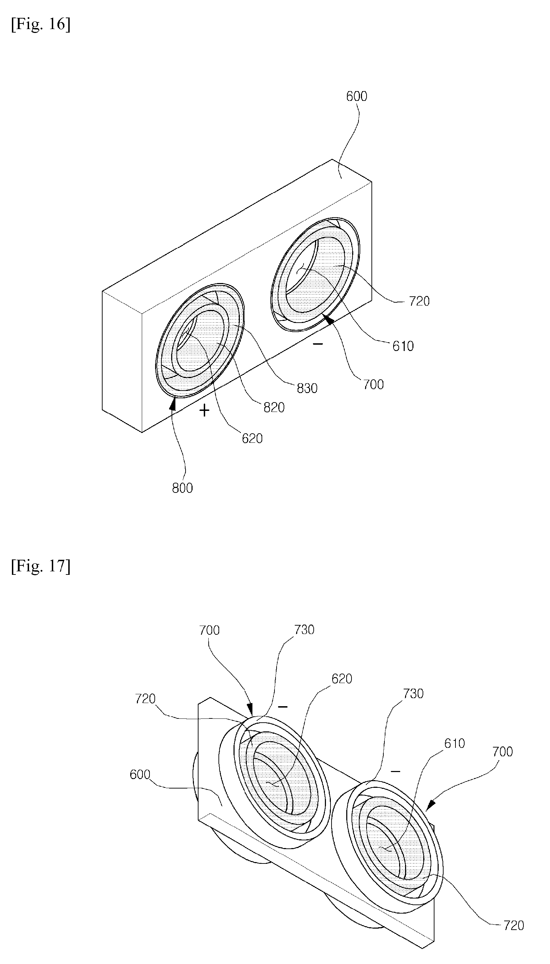

FIG. 16 is a perspective view illustrating other structure of a connector for a hollow core secondary battery according to the third embodiment of the inventive concept.

Meanwhile, the first and second connection portions 700 and 800 may be provided to have a structure protruding from a sidewall of the case 600, as shown in FIG. 13, or a recessed structure formed in the sidewall of the case 600, as shown in FIG. 16. In the case where the first and second connection portions 700 and 800 are the recessed structures formed in the sidewall of the case 600, there is no need to form the first and second insulating covers 730 and 840 on the case 600.

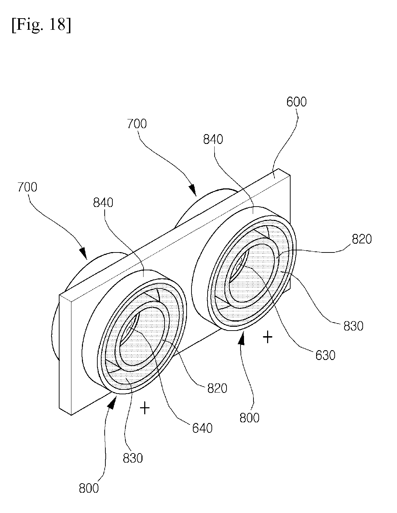

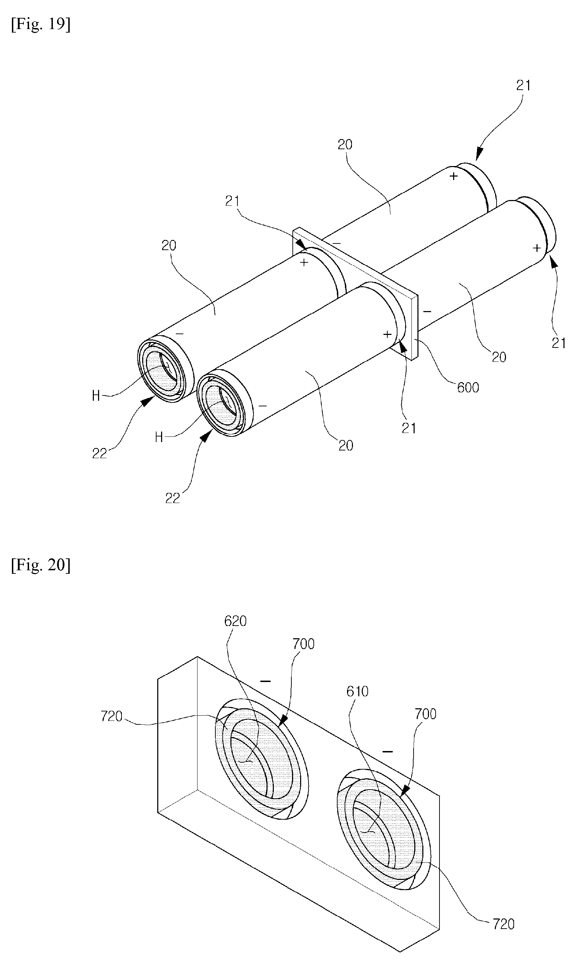

FIGS. 17 and 18 are perspective views illustrating a connector for a hollow core secondary battery according to a fourth embodiment of the inventive concept, and FIG. 19 is a perspective view illustrating a state in which secondary batteries are connected by a connector for a hollow core secondary battery according to the fourth embodiment of the inventive concept.

The connector shown in FIG. 17 may be used for the hollow core secondary battery according to the fourth embodiment of the inventive concept. In such a connector shown in FIG. 17, the first connection portion 700 may be provided on each of the first and second openings 610 and 620 formed through the sidewall of the case 600.

Furthermore, as shown in FIG. 18, third and fourth openings 630 and 640 may be formed through the other sidewall of the case 600 and may be connected to the first and second openings 610 and 620, respectively, and the second connection portion 800 may be provided in each of the third and fourth openings 630 and 640.

Accordingly, in the case where the first terminal portion 21 of the secondary battery is connected to the first connection portion 700 and the second terminal portion 22 of the secondary battery is connected to the second connection portion 800, the secondary batteries 20, which are disposed in parallel with the connector interposed therebetween, may be connected in series, as shown in FIG. 19.

Furthermore, since the first and second openings 610 and 620 are respectively connected to the third and fourth openings 130 and 140, the hollows H of the secondary batteries 20 connected in series by the connector may be connected to each other, the cooling medium supplied through the hollow H of the secondary battery 20 can be moved through the hollows H of the secondary batteries 20, thereby cooling the plurality of secondary batteries 20 (for example, in a successive manner).

FIG. 20 is a perspective view illustrating other structure of a connector for a hollow core secondary battery according to the fourth embodiment of the inventive concept.

As shown in FIG. 20, a pair of first connection portions 700 and a pair of second connection portions 800 may be formed at opposite sidewalls, respectively, of the case 600 to have a recessed structure. In this case, as described above, there is no need to form the first and second insulating covers 730 and 840 on the case 600.

While example embodiments of the inventive concepts have been particularly shown and described, it will be understood by one of ordinary skill in the art that variations in form and detail may be made therein without departing from the spirit and scope of the attached claims.

## Claims

1. A hollow core secondary battery, comprising:
an outer container having a hollow with open opposite ends and containing an electrode assembly therein;
an inner container having a hollow with open opposite ends and being inserted in a central portion of the electrode assembly; and
a vent unit provided on or in the inner container,
wherein, when an internal pressure of the battery is increased above a predetermined value, the vent unit is ruptured to allow for gas and heat to be exhausted to an outside through the hollow of the inner container.

2. The hollow core secondary battery of claim 1, wherein a diameter of the outer container increases in a direction from a central portion thereof toward both end portions thereof.

3. The hollow core secondary battery of claim 2, wherein a diameter of the inner container decreases in a direction from a central portion thereof toward both end portions thereof.

4. The hollow core secondary battery of claim 1, wherein the vent unit comprises:
a vent hole provided through a sidewall of the inner container; and
a cover provided to close the vent hole,
wherein, when the internal pressure of the battery is increased above the predetermined value, the cover is ruptured to open the vent hole.

5. The hollow core secondary battery of claim 4, wherein a diameter of the vent hole increases in a direction from an outer surface of the inner container toward an inner surface of the inner container.

6. The hollow core secondary battery of claim 1, wherein the inner container is provided to have a notch formed on the inner or outer surface thereof, and
the notch is formed along a circumference of the vent unit to have a predetermined depth.

7. A hollow core secondary battery, comprising:
an electrode assembly including a pair of electrode plates and a separator therebetween, the electrode plates and the separator being wound in a form of a jelly roll;
an outer container having a hollow with open opposite ends and containing the electrode assembly therein;
an inner container having a hollow with open opposite ends and being inserted in a central portion of the electrode assembly;
a first insulating unit inserted between the outer container and the electrode assembly to enclose an outer surface of the electrode assembly; and
a second insulating unit inserted between the inner container and the electrode assembly to enclose an outer surface of the inner container.

8. The hollow core secondary battery of claim 7, wherein the first insulating unit is an insulating tape adhered to an inner surface of the outer container.

9. The hollow core secondary battery of claim 7, wherein the first insulating unit is a cylindrical tube, whose outer surface is in close contact with an inner surface of the outer container.

10. The hollow core secondary battery of claim 7, wherein the second insulating unit is an insulating tape adhered to the outer surface of the inner container.

11. The hollow core secondary battery of claim 7, wherein the second insulating unit is a cylindrical tube, in which the inner container is inserted.

12. The hollow core secondary battery of claim 7, wherein the second insulating unit has a length shorter than that of the inner container so that outer surfaces of both end portions of the inner container are exposed outside at a predetermined length.

13. A connector for a hollow core secondary battery, comprising:
a case having first and second openings formed through a sidewall of the case with a predetermined interval;
a first connection portion provided at the first opening and coupled to a first terminal portion, which is provided at a side of the hollow core secondary battery, thereby connecting a hollow of the hollow core secondary battery to the first opening;
a second connection portion provided at the second opening and coupled to a second terminal portion, which is provided at other side of the hollow core secondary battery, thereby connecting the hollow of the hollow core secondary battery to the second opening; and
a conduit provided in the case to connect the first and second openings to each other.

14. The connector of claim 13, wherein the first connection portion comprises:
a first connection plate fixedly attached to the case, the first connection plate comprising a hole connected to the first opening; and
a first connection terminal protruding from a surface of the first connection plate,
wherein the first terminal portion comprises:
a first terminal inserted the first opening to have an outer surface thereof in contact with an inner surface of the first connection terminal, the first terminal comprising a hole connected to the hollow of the hollow core secondary battery; and
a second terminal provided to enclose the first connection terminal and have an inner surface in contact with an outer surface of the first connection terminal.

15. The connector of claim 14, wherein the first connection portion further comprises a first insulating unit, which is extended from the case and is formed spaced apart from the first connection terminal by a predetermined distance to enclose the first connection terminal.

16. The connector of claim 13, wherein the second connection portion comprises:
a second connection plate fixedly attached to the case, the second connection plate comprising a hole connected to the second opening;
a second connection terminal protruding from a surface of the second connection plate; and
a third connection terminal protruding from a surface of the second connection plate and being spaced apart from the second connection terminal by a predetermined distance to enclose the second connection terminal,
wherein the second terminal portion comprises a hole connected to the hollow of the secondary battery and is inserted between the second and third connection terminals to be in contact with the second and third connection terminals, respectively.

17. The connector of claim 16, wherein the second connection portion further comprises a second insulating unit, which is extended from the case to enclose an outer surface of the third connection terminal.

18. A connector for a hollow core secondary battery, comprising:
a case having first and second openings formed through a sidewall of the case with a predetermined interval, and third and fourth openings formed through other sidewall of the case, which is connected to the first and second openings, respectively;
a first connection portion provided at the first and second openings and coupled to a first terminal portion, which is provided at a side of the hollow core secondary battery, thereby connecting a hollow of the hollow core secondary battery to each of the first and second openings; and
a second connection portion provided at the third and fourth openings and coupled to a second terminal portion, which is provided at other side of the hollow core secondary battery, thereby connecting the hollow of the hollow core secondary battery to each of the third and fourth openings.
